# EUROPÄISCHE PATENTSCHRIFT

(11) **EP 3 213 947 B1**
(45) Veröffentlichungstag und Bekanntmachung des Hinweises auf die Patenterteilung: **12.12.2018**
(21) Anmeldenummer: 17157261.3
(22) Anmeldetag: 21.02.2017
(51) Int. Cl.: B60J 1/20

(54) **BESCHATTUNGSVORRICHTUNG FÜR EINEN FAHRZEUGINNENRAUM**
SHADING DEVICE FOR A VEHICLE INTERIOR
DISPOSITIF D'OMBRAGE POUR L'INTERIEUR D'UN VEHICULE

(30) Priorität: 02.03.2016 DE 102016203382
(43) Veröffentlichungstag der Anmeldung: 06.09.2017
(73) Patentinhaber: BOS GmbH & Co. KG, 73760 Ostfildern (DE)
(72) Erfinder: Lekar, Jan, 73760 Ostfildern (DE); Maier, Matthias, 73733 Esslingen (DE); Tran, Huan, 73760 Ostfildern (DE)
(74) Vertreter: Patentanwälte Ruff, Wilhelm, Beier, Dauster & Partner mbB

(56) Entgegenhaltungen:
- EP-A1- 2 979 907
- EP-A2- 1 782 979
- DE-A1-102007 058 262
- DE-A1-102011 103 514

## Beschreibung

Die Erfindung betrifft eine Beschattungsvorrichtung für einen Fahrzeuginnenraum mit einem flexiblen Beschattungsgebilde, das zwischen einer kompakt abgelegten Ruhestellung und einer aufgespannten Beschattungsstellung verlagerbar ist, und das an seinem in Aufspannrichtung vorderen Stirnendbereich mit einem Auszugprofil versehen ist, das einen Mittelabschnitt sowie an gegenüberliegenden Stirnseiten an dem Mittelabschnitt teleskopförmig verschiebbare Führungsabschnitte aufweist, die in fahrzeugseitigen Führungen verlagerbar sind.

Eine derartige Beschattungsvorrichtung ist aus der EP 1 782 979 A2 bekannt. Die bekannte Beschattungsvorrichtung ist zur Beschattung einer Heckscheibe eines Personenkraftwagens vorgesehen. Die Beschattungsvorrichtung weist ein flexibles, bahnförmiges Beschattungsgebilde auf, das auf einer Wickelwelle auf- und abwickelbar gehalten ist. In einer Ruhestellung ist das Beschattungsgebilde auf der Wickelwelle aufgewickelt unterhalb einer Hutablage des Fahrzeuginnenraumes positioniert. Das Beschattungsgebilde weist an einem in Auszugrichtung vorderen Stirnendbereich ein Auszugprofil auf, das in der Ruhestellung des Beschattungsgebildes im Bereich der Hutablage abgelegt ist. Das Auszugprofil ist mit seinen gegenüberliegenden Stirnendbereichen in fahrzeugfesten Führungen parallelverlagerbar, die längs von C-Säulen einer Fahrzeugkarosserie erstreckt sind. Die fahrzeugfesten Führungen erstrecken sich im Bereich der C-Säulen von unten ausgehend schräg nach oben und nach vorne. Da die C-Säulen zu einem Dachbereich des Kraftfahrzeugs hin zu einer Fahrzeugmitte hin geneigt sind, laufen auch die Führungen schräg aufeinander zu. Bei einer Parallelverlagerung des Auszugprofils muss das Auszugprofil demzufolge dem sich permanent ändernden Abstand zwischen den gegenüberliegenden Führungen angepasst werden. Hierzu weist das Auszugprofil einen Mittelabschnitt auf, an dessen gegenüberliegenden Stirnseiten jeweils ein Führungsabschnitt teleskopförmig verschiebbar gelagert ist. An den beiden Führungsabschnitten sind stirnendseitig Mitnehmer vorgesehen, die in den fahrzeugseitigen Führungen geführt sind. Die Mitnehmer werden durch Steigungskabel angetrieben, die über eine Antriebseinheit in den fahrzeugseitigen Führungen synchron zueinander längsverlagert werden. Um in der aufgespannten Beschattungsstellung zu verhindern, dass zwischen einem Dachhimmel und dem Auszugprofil ein Lichtspalt verbleibt, der die Beschattungsfunktion des Fahrzeuginnenraumes beeinträchtigt, ist das Auszugprofil mit einer fest an dem Mittelabschnitt angeordneten Konturplatte versehen, die entsprechend einer Kontur des Dachhimmels geformt ist. Zudem wird das Auszugprofil längs der fahrzeugseitigen Führungen über einen Auszugweg geführt, der neben einer Längsverlagerung des Auszugprofils auch noch eine Verkippung des Auszugprofils über seinen Auszugweg bewirkt. Dadurch wird das Auszugprofil bei einer Bewegung aus der Ruhestellung bis in die aufgespannte Beschattungsstellung um einen gewissen Betrag verdreht, so dass die im Bereich der Hutablage im Wesentlichen horizontal aufliegende Konturplatte im Bereich der aufgespannten Beschattungsstellung gemeinsam mit dem Auszugprofil aufrechtstehend positioniert ist, um den Lichtspalt zu verdecken.

Aus der EP 2 979 907 A1 ist eine Beschattungsvorrichtung für eine Heckscheibenanordnung eines Kraftfahrzeugs bekannt. Die Beschattungsvorrichtung weist ein Auszugprofil auf, das einen Mittelabschnitt sowie zwei an gegenüberliegenden Stirnseiten in dem Mittelabschnitt teleskopförmig verschiebbare Führungsabschnitte aufweist. Die Führungsabschnitte sind mit Hilfe von Führungsschlitten in stationären seitlichen Führungsanordnungen verschiebbar gelagert.

Die DE 10 2007 058 262 A1 offenbart ein Führungssystem für ein Fahrzeugrollo. Das Fahrzeugrollo weist an seinem in Auszugrichtung vorderen Stirnendbereich ein Auszugprofil auf, das mit Hilfe von zwei Gleitelementen in gegenüberliegenden Führungsschienen verlagerbar ist. Die Gleitelemente lagern das Auszugprofil mit Hilfe von Zapfen, die eine Verschwenkung des Auszugprofils zwischen seiner Ruhestellung und seiner Funktionsstellung ermöglichen.

Aus der DE 10 2011 103 514 A1 ist eine Rollo-Anordnung mit einer Rollobahn und einem Auszugstab mit Breitenausgleich bekannt. Zur Erzeugung des Breitenausgleichs ist eine Führungsvorrichtung vorgesehen, die den Auszugstab entlang einer Führungsschiene führt und mit einer auf einer Umfangsfläche einer Lagerachse verlaufenden Steuerkurve versehen ist.

Aufgabe der Erfindung ist es, eine Beschattungsvorrichtung der eingangs genannten Art zu schaffen, die mit einfachen Mitteln eine gute Beschattungsfunktion in der aufgespannten Beschattungsstellung ermöglicht.

Diese Aufgabe wird dadurch gelöst, dass an dem Mittelabschnitt eine Blende angeordnet ist, die zwischen einer Ruhelage und einer Funktionslage beweglich relativ zu dem Mittelabschnitt gelagert ist, und dass zur Verlagerung der Blende in wenigstens einer Richtung zwischen der Ruhelage und der Funktionslage eine Zwangssteuereinrichtung vorgesehen ist, die die Blende in Abhängigkeit von einer Verschiebung wenigstens eines Führungsabschnittes verlagert. Durch die erfindungsgemäße Lösung ist lediglich eine bewegliche Blende vorgesehen, die zur Abdeckung des Lichtspaltes in der Beschattungsstellung dient, nicht aber eine aufwendige Krümmung der fahrzeugseitigen Führungen, wie es beim Stand der Technik vorgesehen ist. Erfindungsgemäß können die fahrzeugseitigen Führungen geradlinig erstreckt sein, wodurch sich eine reibungsarme und einfache Führung für die Führungsabschnitte des Auszugprofils erzielen lässt. Erfindungsgemäß wird die relativ zu dem Mittelabschnitt des Auszugprofils teleskopförmige Beweglichkeit der Führungsabschnitte ausgenützt, um die gewünschte Verlagerung der Blende zu erzielen. Die Blende kann relativ zu dem Mittelabschnitt linearbeweglich in einer Ebene oder längs einer Kurvenbahn oder auch schwenkbeweglich gelagert sein. Die Zwangssteuereinrichtung ist vorzugsweise mechanisch ausgeführt über komplementäre Kontaktflächen wie Kulissenbahnen, schiefe Ebenen oder über entsprechende Getriebe oder ähnliches. Die Zwangssteuereinrichtung kann derart ausgeführt sein, dass sie die Blende sowohl in die Ruhelage als auch in die Funktionslage bewegt. Alternativ kann die Zwangssteuereinrichtung so ausgestaltet sein, dass sie die Blende lediglich in einer Richtung beaufschlagt, nämlich in Richtung der Funktionslage oder in Richtung der Ruhelage. Die Bewegung der Blende in die entsprechend andere Richtung kann dann durch Schwerkraft oder auch durch Federkraft einer Federeinheit erfolgen. Erfindungsgemäß ist die Beschattungsvorrichtung zur Beschattung von Seiten- oder Heckscheiben oder auch von Frontscheiben von Fahrzeuginnenräumen vorgesehen. Besonders vorteilhaft ist die Beschattungsvorrichtung zur Beschattung des Fahrzeuginnenraums eines Personenkraftwagens vorgesehen. Falls die Beschattungsvorrichtung zur Beschattung einer Seitenscheibe eines Personenkraftwagens dient, ist eine fahrzeugseitige Begrenzungskontur vorzugsweise ein entsprechender Seitenscheibenrahmen. Falls die Beschattungsvorrichtung zur Beschattung einer Heckscheibe eines Fahrzeuginnenraums eines Personenkraftwagens dient, ist die fahrzeugseitige Begrenzungskontur eine Dachhimmelkontur eines Dachbereichs des Fahrzeuginnenraumes. Grundsätzlich ist die Beschattungsvorrichtung auch zur Beschattung von Frontscheiben von Kraftfahrzeugen vorgesehen. Die erfindungsgemäße Beschattungsvorrichtung eignet sich für Kraftfahrzeuge zu Land, zu Wasser und zu Luft und damit insbesondere für Rad- und Kettenfahrzeuge, für Schienenfahrzeuge und für Flugzeuge.

In Ausgestaltung der Erfindung ist der Blende eine Rückstellfederanordnung zugeordnet, die auf die Blende eine permanente Federbelastung in Richtung der Ruhelage ausübt. Bei dieser Ausgestaltung ist die Zwangssteuereinrichtung dazu vorgesehen, die Blende in Richtung der Funktionslage zu verlagern.

In weiterer Ausgestaltung der Erfindung weist die Zwangssteuereinrichtung zueinander komplementäre mechanische Steuerkonturen an wenigstens einem Führungsabschnitt einerseits und an der Blende andererseits auf, die bei einer Verlagerungsbewegung des Auszugprofils zwischen der Ruhestellung und der Beschattungsstellung zusammenwirken. Die mechanischen Steuerkonturen des wenigstens einen Führungsabschnittes einerseits und der Blende andererseits liegen aneinander an, um die gewünschte Zwangsführung zu erzielen. Vorzugsweise sind beide Führungsabschnitte mit entsprechenden Steuerkonturen versehen, und die Blende weist zwei komplementäre Steuerkonturen für jeden Führungsabschnitt auf, um auch bei großer Länge der Blende eine zuverlässige Verschwenkung in die Funktionslage zu erzielen. Wenn eine Steifigkeit der Blende ausreichend groß ist, ist es jedoch auch möglich, lediglich einen der beiden Führungsabschnitte mit einer mechanischen Steuerkontur zu versehen, und auch an der Blende lediglich im Bereich dieses Führungsabschnittes eine komplementäre mechanische Steuerkontur vorzusehen, um die Blende zwangsgesteuert in die Funktionslage verschwenken zu können.

In weiterer Ausgestaltung der Erfindung sind die Steuerkonturen als gegeneinander verlagerbare Gleitkonturen gestaltet. In vorteilhafter Weise ist der wenigstens eine Führungsabschnitt in einem dem anderen Führungsabschnitt zugewandten Stirnendbereich mit einer als Gleitkontur dienenden Anlaufschräge versehen. Vorteilhaft weist die Blende wenigstens einen Steuernocken auf, der in eine Bewegungsbahn des Führungsabschnitts hineinragt und mit einer auf die Anlaufschräge abgestimmten Gleitkontur versehen ist. Die Anlaufschräge und die komplementäre Gleitkontur wirken nach Art von schiefen Ebenen miteinander zusammen.

In weiterer Ausgestaltung der Erfindung ist eine Umrisskontur der Blende derart auf eine fahrzeugseitige Begrenzungskontur einer Fahrzeuginnenraumverkleidung im Bereich der Beschattungsstellung des Beschattungsgebildes abgestimmt, dass die Umrisskontur in der Funktionslage der Blende im Wesentlichen bündig mit der fahrzeugseitigen Begrenzungskontur abschließt. Hierdurch ist eine zumindest nahezu vollständige Beschattung einer Scheibe eines Kraftfahrzeugs erzielbar.

In weiterer Ausgestaltung der Erfindung ist die Zwangssteuereinrichtung dem Auszugprofil zugeordnet und weist wenigstens ein an dem Auszugprofil beweglich gelagertes Steuerelement auf, das für eine Überführung der Blende in die Funktionslage und/oder die Ruhelage mit der Blende kontaktierbar ist. Hierdurch kann die Blende äußerst einfach als Platten- oder Leistenteil gestaltet sein. Das wenigstens eine Steuerelement greift vorzugsweise an einer dem Auszugprofil zugewandten Unterseite an der Blende an, indem das Steuerelement sich an der Blende gleit- oder rollbeweglich abstützt.

In weiterer Ausgestaltung der Erfindung ist das wenigstens eine Steuerelement quer zu einer Verschiebebewegung wenigstens eines Führungsabschnittes an dem Mittelabschnitt linearbeweglich gelagert. Eine Verschiebebewegung des Führungsabschnittes wird demzufolge in eine zwangsgesteuerte Linearbewegung des Steuerelementes quer zu der Verschieberichtung des Führungsabschnittes übertragen.

In weiterer Ausgestaltung der Erfindung ist das wenigstens eine Steuerelement schwenkbeweglich an dem Führungsabschnitt oder dem Mittelabschnitt gelagert. Das Steuerelement ist zwischen einer in dem Auszugprofil versenkt angeordneten Ruhestellung und einer in Richtung der Blende nach außen verschwenkten Funktionsstellung schwenkbeweglich gelagert. Dem Steuerelement kann eine Rückstelleinheit, insbesondere in Form einer Rückstellfeder, zugeordnet sein, die das Steuerelement ohne eine Belastung durch den Führungsabschnitt permanent in der Ruhestellung innerhalb des Auszugprofils hält.

In weiterer Ausgestaltung der Erfindung weisen der wenigstens eine Führungsabschnitt und das wenigstens eine Steuerelement zueinander komplementäre Steuerkonturen auf, die einander für Verlagerungsbewegungen des Steuerelements und des Führungsabschnittes gleit- oder rollbeweglich kontaktieren. Vorzugsweise bilden die Steuerkonturen Gleitkonturen. Alternativ ist es möglich, wenigstens einer Steuerkontur wenigstens ein Roll- oder Wälzelement zuzuordnen, das auf der Steuerkontur des jeweils anderen Teiles abrollt.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt einen Ausschnitt eines Fahrzeuginnenraums eines Personenkraftwagens mit einer Ausführungsform einer erfindungsgemäßen Beschattungsvorrichtung in einer Ruhestellung,
- Fig. 2: die Beschattungsvorrichtung nach Fig. 1 in einer Beschattungsstellung,
- Fig. 3: schematisch die Beschattungsvorrichtung nach den Fig. 1 und 2 in der Ruhestellung und in der Beschattungsstellung,
- Fig. 4: schematisch ein Auszugprofil der Beschattungsvorrichtung nach Fig. 3 in einer Ruhestellung,
- Fig. 5: schematisch das Auszugprofil nach Fig. 4 in der Beschattungsstellung,
- Fig. 6: in einem Querschnitt das Auszugprofil nach Fig. 4 in der Ruhestellung,
- Fig. 7: in einem Querschnitt das Auszugprofil gemäß Fig. 5 in der Beschattungsstellung,
- Fig. 8: Teile des Auszugprofils nach den Fig. 4 bis 7, die zur Zwangssteuerung einer Blende des Auszugprofils dienen,
- Fig. 9: schematisch in einer Schnittdarstellung einen Ausschnitt einer weiteren Ausführungsform einer erfindungsgemäßen Beschattungsvorrichtung im Bereich eines Mittelabschnittes des Auszugprofils,
- Fig. 10: in einer Darstellung ähnlich Fig. 9 eine weitere Ausführungsform einer erfindungsgemäßen Beschattungsvorrichtung ähnlich Fig. 9,
- Fig. 11: in einer Darstellung gemäß Fig. 10 eine weitere Ausführungsform einer erfindungsgemäßen Beschattungsvorrichtung ähnlich den Fig. 9 und 10,
- Fig. 12: in perspektivischer Darstellung einen Teilbereich der Beschattungsvorrichtung nach Fig. 9 in einer Ruhelage der Blende und
- Fig. 13: in perspektivischer Darstellung die Beschattungsvorrichtung nach Fig. 12 in einer Funktionslage der Blende.

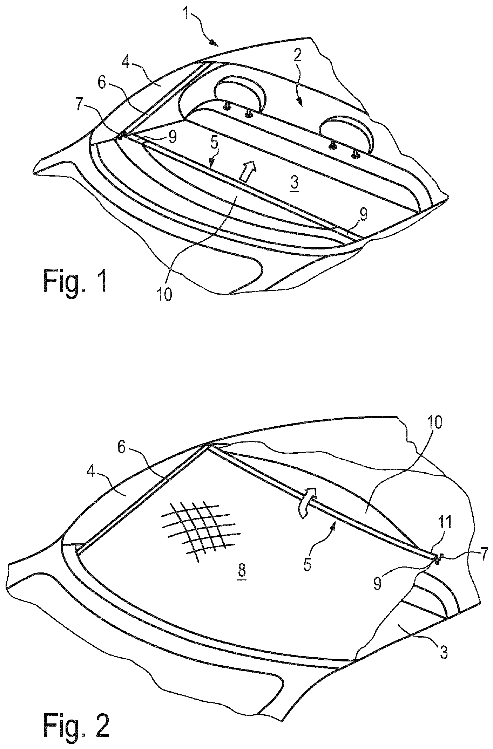

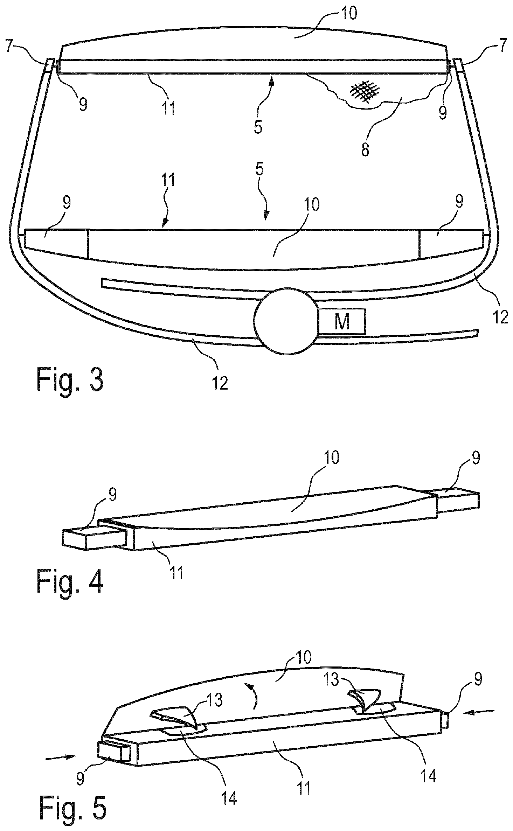

Ein Personenkraftwagen 1 gemäß den Fig. 1 und 2 weist einen Fahrzeuginnenraum 2 auf, der heckseitig durch eine Heckscheibe begrenzt ist. Die Heckscheibe mündet auf gegenüberliegenden Fahrzeugseiten in jeweils einen C-Säulenbereich. Zwischen den gegenüberliegenden C-Säulenbereichen 4 des Fahrzeuginnenraumes 2 erstreckt sich im Wesentlichen horizontal eine Ablagefläche 3. Im Bereich dieser Ablagefläche 3 ist eine Beschattungsvorrichtung vorgesehen, die anhand der Fig. 3 bis 8 nachfolgend näher beschrieben ist und dazu dient, die schrägstehende Heckscheibe zu beschatten. Dadurch wird vermieden, dass zu starke Sonnenstrahlung durch die Heckscheibe hindurch in den Fahrzeuginnenraum 2 dringen kann.

Die Beschattungsvorrichtung weist ein flexibles, bahnförmiges Beschattungsgebilde 8 auf, das als textile Web- oder Maschenware oder als Folienbahn ausgeführt ist. Das Beschattungsgebilde 8 ist in nicht näher dargestellter Weise auf einer Wickelwelle auf- und abwickelbar gehalten, die unterhalb der Ablagefläche 3 fahrzeugseitig drehbar gelagert ist. Die Wickelwelle erstreckt sich in Fahrzeugquerrichtung. Das Beschattungsgebilde 8 ist aus der auf der Wickelwelle aufgewickelten Ruhestellung schräg nach oben und nach vorne - auf eine Fahrzeuglängsrichtung bezogen - in eine Beschattungsstellung ausziehbar, die anhand der Fig. 2 erkennbar ist. Zum Auf- oder Abwickeln des Beschattungsgebildes 8 ist das Beschattungsgebilde 8 an seinem in Auszugrichtung vorderen Stirnendbereich an einem Auszugprofil 5 befestigt, das nachfolgend näher beschrieben wird. Das Auszugprofil 5 ist an seinen gegenüberliegenden Stirnendbereichen mit Mitnehmern 7 versehen, die in fahrzeugseitigen Führungen 6 längsverfahrbar gelagert sind. Die fahrzeugseitigen Führungen 6 sind im Bereich der C-Säulenabschnitte 4 des Fahrzeuginnenraumes angeordnet und erstrecken sich analog der Neigung der Heckscheibe sowie der Neigung der C-Säulenabschnitte 4 schräg nach oben und nach vorne. Dabei sind die gegenüberliegenden Führungen 6 zur Fahrzeugmitte hin nach innen geneigt, so dass jede Führung 6 von einem unteren Endbereich im Bereich der Ablagefläche 3 ausgehend in Fahrzeughochrichtung, in Fahrzeugquerrichtung und in Fahrzeuglängsrichtung geneigt ist. Die Führungen 6 sind ausgehend von ihrem unteren Endbereich schräg nach oben zur Fahrzeugmitte hin sowie in Fahrzeuglängsrichtung nach vorne erstreckt. In den Führungen 6 verlaufen flexible Steigungskabel 12, die auf die Mitnehmer 7 Zug- und Druckkräfte zur Verlagerung der Mitnehmer 7 in den Führungen 6 ausüben können. Jedem Mitnehmer 7 ist jeweils ein Steigungskabel 12 zugeordnet, die gemäß Fig. 3 über eine zentrale Antriebseinheit synchron zueinander angetrieben werden. Die Antriebseinheit weist einen Elektromotor M sowie ein nicht näher bezeichnetes Getriebe auf, das entsprechend synchrone Verlagerungsbewegungen auf die beiden Steigungskabel 12 ausübt. Das Auszugprofil 5 ist mittels der Steigungskabel 12 und der Antriebseinheit längs der Führungen zwischen einer Ruhestellung (in Fig. 3 unten dargestellt) und einer Beschattungsstellung (in Fig. 3 oben dargestellt) parallelverlagerbar.

Da sich der Abstand der gegenüberliegenden Führungen 6, in denen die Steigungskabel 12 geführt sind, von einem unteren Endbereich zu einem Dachbereich des Fahrzeuginnenraumes 2 hin verringert, muss sich auch die in Fahrzeugquerrichtung erstreckte Länge des Auszugprofils 5, das über die Mitnehmer 7 permanent in den Führungen 6 gehalten ist, verändern.

Hierzu weist das Auszugprofil 5 einen Mittelabschnitt 11 sowie zwei teleskopförmig in dem Mittelabschnitt 11 geführte Führungsabschnitte 9 auf, die an gegenüberliegenden Stirnseiten des Mittelabschnittes 11 aus diesem heraustreten (Fig. 4 und 5). Der Mittelabschnitt 11 ist zumindest teilweise als Hohlprofil ausgeführt, um eine teleskopförmige Längsverschiebbarkeit der Führungsabschnitte 9 in dem Mittelabschnitt 11 zu ermöglichen. Die Führungsabschnitte 9 sind gegenläufig zueinander in dem Mittelabschnitt 11 verlagerbar, sobald das Auszugprofil 5 zwischen der Ruhestellung und der Beschattungsstellung des Beschattungsgebildes 8 verlagert wird. Jeder Führungsabschnitt 9 ist an seinem außenseitigen Stirnende mit dem jeweiligen Mitnehmer 7 verbunden, der wiederum mit dem jeweiligen Steigungskabel 12 in der zugeordneten Führung 6 verbunden ist.

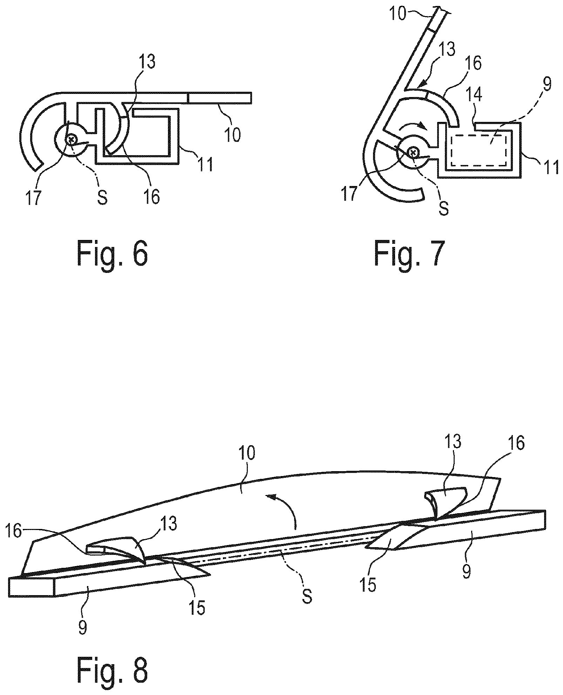

An dem Mittelabschnitt 11 ist zusätzlich eine Blende 10 um eine in Fahrzeugquerrichtung erstreckte Schwenkachse S schwenkbeweglich gelagert (Fig. 6 bis 8). Die Blende ist zwischen einer Ruhelage gemäß Fig. 4 und 6 und einer Funktionslage gemäß Fig. 5 und 7, 8 verlagerbar. Eine Umrisskontur der Blende 10 ist auf eine Dachhimmelkontur des Fahrzeuginnenraumes 2 abgestimmt. Hierdurch kann die Blende 10 in aufgerichteter Funktionslage gemäß Fig. 3, 5, 7 und 8, wenn das Beschattungsgebilde 8 in seine Beschattungsstellung überführt ist, einen verbleibenden Lichtspalt zwischen dem Mittelabschnitt 11 und der Dachhimmelkontur im Wesentlichen bündig abschließen, so dass in der Beschattungsstellung des Beschattungsgebildes 8 oberhalb des Mittelabschnittes 11 kein nennenswerter Sichtspalt verbleibt, durch den Licht hindurch in den Fahrzeuginnenraum eintreten kann.

Die Blende 10 wird durch eine Rückstellfederanordnung 17 permanent in ihrer Ruhelage gemäß Fig. 4 und 6 gehalten. Die Blende 10 ist demzufolge permanent drehmomentbeaufschlagt durch die Federkraft der Rückstellfederanordnung 17. Die Rückstellfederanordnung 17 ist bei der dargestellten Ausführungsform durch wenigstens eine Schenkelfeder gebildet, die koaxial zur Schwenkachse S angeordnet ist und sich am Mittelabschnitt 11 einerseits und an der Blende 10 andererseits mit einem entsprechenden Schenkelende abstützt.

Die Blende 10 wird mittels einer nachfolgend näher beschriebenen mechanischen Zwangssteuereinrichtung bei einer Überführung des Auszugprofils 5 aus der Ruhestellung des Beschattungsgebildes 8 in die Beschattungsstellung des Beschattungsgebildes 8 zwangsläufig aus der Ruhelage in die Funktionslage verschwenkt. Die Verschwenkung der Blende 10 aus der Ruhelage in die Funktionslage erfolgt in Abhängigkeit von der teleskopförmigen Verschiebung der Führungsabschnitte 9. Hierzu weist die Blende 10 im Bereich ihrer Unterseite zwei in den Mittelabschnitt 11 hinein nach innen abragende Steuernocken 13 auf, die durch jeweils eine Aussparung 14 im Bereich einer Oberseite des Mittelabschnittes 11 in der Ruhelage der Blende 10 hindurchragen. Die beiden Steuernocken 13 ragen in die lineare Bewegungsbahn der Führungsabschnitte 9 hinein. Jeder Steuernocken 13 weist eine schräg verlaufende Gleitkontur 16 auf, die als Steuerkontur im Sinne der Erfindung dient. Die Gleitkontur 16 erstreckt sich ausgehend von einer Unterseite der Blende 10 zur Mitte des Auszugprofils 5 hin schräg nach unten und nach innen. Den Gleitkonturen 16 der Steuernocken 13 ist an einem innenseitigen Stirnendbereich jedes Führungsabschnittes 9 jeweils eine komplementäre Steuerkontur zugeordnet, die als Anlaufschräge 15 gestaltet ist. Die jeweilige Anlaufschräge 15 ist an dem dem jeweiligen Mitnehmer 7 gegenüberliegenden Stirnende des Führungsabschnittes 9 angeordnet. Die Anlaufschräge 15 erstreckt sich von einer Oberseite des jeweiligen Führungsabschnittes 9 ausgehend zur Mitte des Auszugprofils hin schräg nach unten.

In der Ruhestellung des Auszugprofils 5 und des Beschattungsgebildes 8 sind die beiden Führungsabschnitte 9 relativ zu dem Mittelabschnitt soweit nach außen verlagert, dass die Anlaufschrägen 15 der Führungsabschnitte 9 mit den Steuernocken 13 nicht zusammenwirken. Die Blende 10 befindet sich in dieser Position in ihrer Ruhelage, die durch die Federkraft der Rückstellfederanordnung 17 gesichert ist. Die Steuernocken 13 sind durch die Aussparungen 14 hindurch ins Innere des Mittelabschnittes 11 eingetaucht. Sobald nun die Steigungskabel 12 die Mitnehmer 7 in den Führungen 6 nach oben verlagern, werden zwangsläufig die Führungsabschnitte 9 zur Mitte des Auszugprofils 5 hin in den Mittelabschnitt 11 nach innen verschoben. Dabei gelangen die Anlaufschrägen 15 und die Gleitkonturen 16 der Steuernocken 13 miteinander in Wirkverbindung, wobei zwangsläufig die Anlaufschrägen 15 die Steuernocken 13 nach oben drücken. Da die Steuernocken 13 im Bereich der Unterseite der Blende 10 fest mit der Blende 10 verbunden sind, wird zwangsläufig die Blende 10 nach oben verschwenkt. In der Beschattungsstellung des Beschattungsgebildes 8 sind die Führungsabschnitte 9 so weit in den Mittelabschnitt 11 hinein nach innen verschoben, dass die Blende 10 ihre aufgerichtete Funktionslage erreicht hat, in der ein verbleibender Sichtspalt zwischen dem Mittelabschnitt 11 und der Dachhimmelkontur verdeckt wird.

Sobald nun das Beschattungsgebilde 8 wieder in Richtung seiner Ruhestellung nach unten verlagert wird, bewegen sich zwangsläufig die Führungsabschnitte 9 des Auszugprofils 5 wieder nach außen. Die Rückstellkraft der Rückstellfederanordnung 17 stellt sicher, dass die Steuernocken 13 mit den Anlaufschrägen 15 der Führungsabschnitte in Anlage bleiben, so dass die Blende 10 zwangsläufig durch die Federkraft der Rückstellfederanordnung 17 wieder in Richtung der Ruhelage verschwenkt wird. Sobald das Auszugprofil 5 die Ruhestellung des Beschattungsgebildes 8 erreicht hat, ist auch die Blende 10 wieder in die Ruhelage überführt.

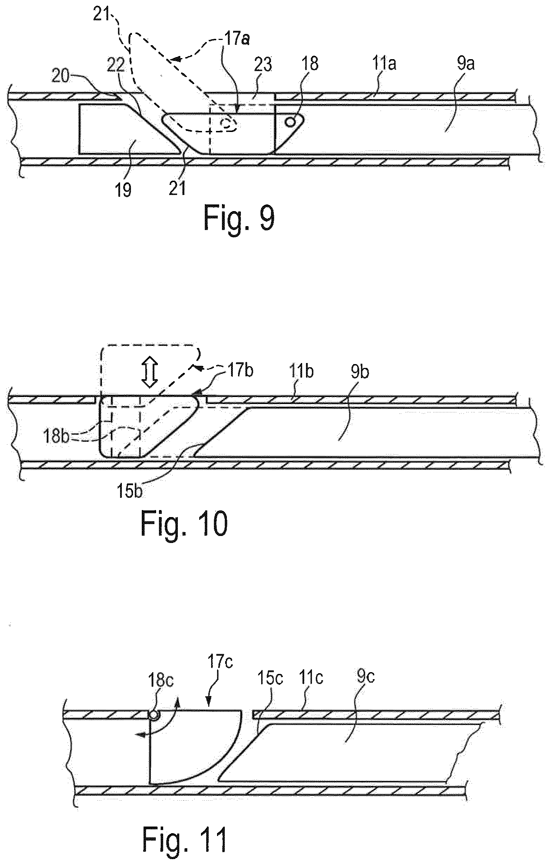

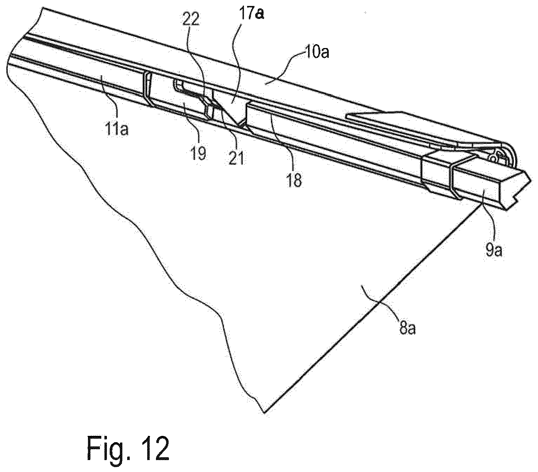

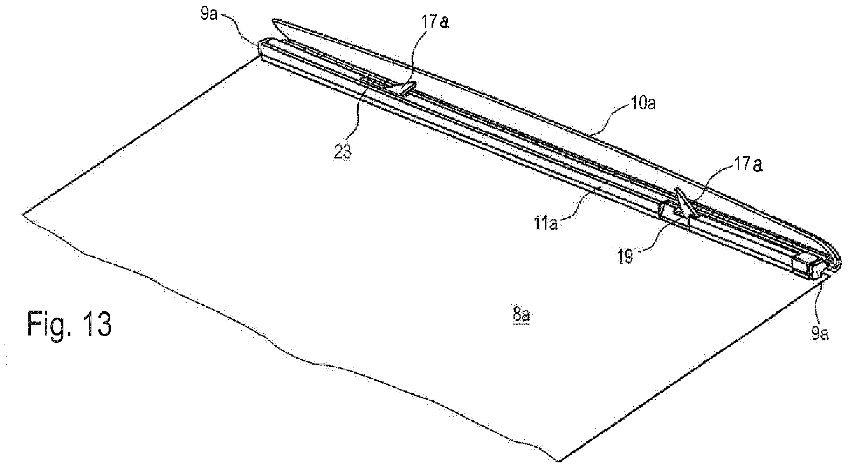

Die anhand der Fig. 9 bis 13 dargestellten Ausführungsformen einer erfindungsgemäßen Beschattungsvorrichtung entsprechen von grundsätzlichem Aufbau und grundsätzlicher Funktion her der Beschattungsvorrichtung für die Heckscheibe eines Personenkraftwagens, wie sie anhand der Fig. 1 bis 8 dargestellt und beschrieben ist. Funktionsgleiche Teile und Abschnitte der Ausführungsformen nach den Fig. 9 bis 13 sind demzufolge mit gleichen Bezugszeichen unter Hinzufügung von Kleinbuchstaben a, b, c für die jeweilige Ausführungsform versehen. Zur Vermeidung von Wiederholungen wird bezüglich der Ausführungsformen nach den Fig. 9 bis 13 ergänzend auf die Ausführungen zu der Beschattungsvorrichtung nach den Fig. 1 bis 8 verwiesen. Nachfolgend wird auf die Unterschiede der Ausführungsformen nach den Fig. 9 bis 13 eingegangen.

Bei der Beschattungsvorrichtung nach den Fig. 9 und 12, 13 ist das Beschattungsgebilde 8a an einem Mittelabschnitt 11a angeordnet, der Teil des Auszugprofils ist. In dem Mittelabschnitt 11a sind auf gegenüberliegenden Stirnseiten zwei teleskopförmig geführte Führungsabschnitte 9a gelagert, die stirnseitig aus dem Mittelabschnitt 11a herausragen. Der jeweilige Führungsabschnitt 9a ist in gleicher Weise mit einem Mitnehmer verbunden, wie dies anhand der Fig. 1 bis 3 zu der Ausführungsform nach den Fig. 1 bis 8 bereits beschrieben wurde. Wesentlicher Unterschied bei der Ausführungsform nach den Fig. 9, 12 und 13 ist es, dass die Zwangssteuereinrichtung im Bereich jedes Führungsabschnittes 9a jeweils ein Steuerelement 17a aufweist, das schwenkbeweglich an einer zu einer Mitte des Auszugprofils hingewandten Stirnseite des jeweiligen Führungsabschnittes 9a gelagert ist zwischen einer Ruhestellung, in der das Steuerelement 17a innerhalb des Mittelabschnitts versenkt positioniert ist, und einer Funktionsstellung, in der das Steuerelement 17 a nach oben durch einen Durchtrittsschlitz 23 des Mittelabschnitts 11a hindurch ausgeschwenkt ist, um die Blende 10a in ihre Funktionslage von dem Mittelabschnitt 11a weg nach außen zu drücken. Das Steuerelement 17a ist an dem jeweiligen Führungsabschnitt 9a mittels einer Schwenklagerung 18 schwenkbeweglich gelagert. Das Steuerelement 17a weist frontseitig eine Steuerkontur 21 auf, die mit einer komplementären Steuerkontur 22 eines stationär im Mittelabschnitt 11a angeordneten Stützteiles 19 und einer im Bereich des Schlitzes 23 vorgesehenen Gleitkontur 20 in Gleitkontakt bringbar ist. Das Stützteil 19 bildet mit der Gleitkontur 20 eine Anlaufschräge für die Steuerkontur 21 des Steuerelementes 17a, die ebenfalls als komplementär gestaltete Anlaufschräge ausgeführt ist. Bei einer teleskopförmigen Verschiebung des Führungsabschnittes 9a nach innen wird so zwangsläufig das Steuerelement 17a nach oben ausgelenkt, wodurch es durch den Durchtrittsschlitz 23 hindurch nach außen dringt und gegen eine Unterseite der Blende 10a gedrückt wird. Hierdurch wird die schwenkbeweglich gelagerte Blende 10a zwangsläufig in ihre Funktionslage überführt.

Bei der Ausführungsform nach Fig. 10 weist die Zwangssteuereinrichtung ein im Mittelabschnitt 11b des Auszugprofils (in der Zeichnung nach oben) linearbeweglich gelagertes Steuerelement 17b auf, das nockenförmig ausgebildet ist. Das Steuerelement 17b ist quer zur Verschieberichtung des Führungsabschnittes 9b linearbeweglich geführt mittels einer Linearführung 18b, die als Schwalbenschwanzführung oder als ähnliche Linearführung ausgeführt sein kann. Die Linearführung 18b ist in den Mittelabschnitt 11b des Auszugprofils integriert. Das Steuerelement 17b weist ein komplementär gestaltetes Führungsprofil auf, um in der Linearführung 18b linearbeweglich verschoben werden zu können. Der Führungsabschnitt 9b weist stirnseitig eine als Anlaufschräge gestaltete Steuerkontur 15b auf, die mit einer nicht näher bezeichneten, komplementär ausgeführten Gleitkontur im Bereich des Steuerelementes 17b zusammenwirkt. Die entsprechenden Gleitflächen sind relativ zur Verschieberichtung des Führungsabschnittes 9b und der Gleitrichtung des Steuerelementes 17b derart gestaltet, dass keine Selbsthemmung beim Auftreffen des Führungsabschnittes 9b auf das Steuerelement 17b eintritt. Wie anhand des Doppelpfeiles in Fig. 10 und der gestrichelten Darstellung erkennbar ist, wird das Steuerelement 17b bei einer Verschiebebewegung des Führungsabschnittes 9b zur Mitte des Mittelabschnittes 11b hin zwangsläufig nach oben verlagert, wodurch das Steuerelement 17b aus seiner in den Mittelabschnitt 11b versenkten Ruhelage durch einen Schlitz oder einen Ausschnitt einer Wandung des Mittelabschnittes 11b hindurch nach oben verlagert wird. Hierdurch wird in gleicher Weise die Unterseite der schwenkbeweglichen Blende beaufschlagt, wie dies bei der Ausführungsform gemäß den Fig. 9, 12 und 13 der Fall ist. Die Blende wird demzufolge aus ihrer am Mittelabschnitt 11b anliegenden Ruhelage in ihre Funktionslage nach außen weggeschwenkt.

Bei der Ausführungsform gemäß Fig. 11 ist das Steuerelement 17c ebenfalls am Mittelabschnitt 11c des Auszugprofils beweglich gelagert. Im Gegensatz zur Ausführungsform nach Fig. 10 ist das Steuerelement 17c jedoch schwenkbeweglich gelagert im Bereich einer Schwenklagerung 18c. Die Schwenklagerung 18c ist an einer Wandung in einem Randbereich des Durchtrittsschlitzes des Mittelabschnittes 11c vorgesehen. Das Steuerelement 17c weist eine kreisbogenartige, nicht näher bezeichnete Steuerkontur auf, die mit der als Anlaufschräge gestalteten Steuerkontur 15c des Führungsabschnittes 9c zusammenwirkt. Auch diese beiden Steuerkonturen sind derart ausgeführt, dass sich keine Selbsthemmung ergeben kann. Bei einer Verschiebebewegung des Führungsabschnittes 9c zur Mitte des Mittelabschnittes 11c hin, d. h. in Fig. 11 nach links, gerät die Steuerkontur 15c an der Steuerkontur des Steuerelementes 17c zur Anlage und drückt zwangsläufig das Steuerelement 17c nach oben, wodurch dieses in Pfeilrichtung aus seiner im Mittelabschnitt 11c versenkten Ruhelage nach außen schwenkt. Dabei gerät ein Randbereich des Steuerelementes 17c in Anlage mit einer Unterseite der Blende, wodurch sich die gewünschte Zwangsführung für die Blende ergibt.

## Patentansprüche

1. Beschattungsvorrichtung für einen Fahrzeuginnenraum (2) mit einem flexiblen Beschattungsgebilde (8), das zwischen einer kompakt abgelegten Ruhestellung und einer aufgespannten Beschattungsstellung verlagerbar ist, und das an seinem in Aufspannrichtung vorderen Stirnendbereich mit einem Auszugprofil (5) versehen ist, das einen Mittelabschnitt (11) sowie an gegenüberliegenden Stirnseiten an dem Mittelabschnitt (11) teleskopförmig verschiebbare Führungsabschnitte (9) aufweist, die in fahrzeugseitigen Führungen (6) verlagerbar sind, **dadurch gekennzeichnet, dass** an dem Mittelabschnitt (11) eine Blende (10) angeordnet ist, die zwischen einer Ruhelage und einer Funktionslage beweglich relativ zu dem Mittelabschnitt (11) gelagert ist, und dass zur Verlagerung der Blende (10) in wenigstens einer Richtung zwischen der Ruhelage und der Funktionslage eine Zwangssteuereinrichtung vorgesehen ist, die die Blende (10) in Abhängigkeit von einer Verschiebung wenigstens eines Führungsabschnittes (9) verlagert.

2. Beschattungsvorrichtung nach Anspruch 1, **dadurch gekennzeichnet, dass** die Blende (10) an dem Mittelabschnitt (11) schwenkbeweglich gelagert ist.

3. Beschattungsvorrichtung nach Anspruch 1 oder 2, **dadurch gekennzeichnet, dass** der Blende (10) eine Rückstellfederanordnung (17) zugeordnet ist, die auf die Blende (10) eine permanente Federbelastung in Richtung der Ruhelage ausübt.

4. Beschattungsvorrichtung nach Anspruch 1, **dadurch gekennzeichnet, dass** die Zwangssteuereinrichtung zueinander komplementäre mechanische Steuerkonturen (15, 16) an wenigstens einem Führungsabschnitt (9) einerseits und an der Blende (10) andererseits aufweist, die bei einer Verlagerungsbewegung des Auszugprofils (5) zwischen der Ruhestellung und der Beschattungsstellung zusammenwirken.

5. Beschattungsvorrichtung nach Anspruch 4, **dadurch gekennzeichnet, dass** die Steuerkonturen als gegeneinander verlagerbare Gleitkonturen gestaltet sind.

6. Beschattungsvorrichtung nach Anspruch 5, **dadurch gekennzeichnet, dass** der wenigstens eine Führungsabschnitt (9) in einem dem anderen Führungsabschnitt (9) zugewandten Stirnendbereich mit einer als Gleitkontur dienenden Anlaufschräge (15) versehen ist.

7. Beschattungsvorrichtung nach Anspruch 6, **dadurch gekennzeichnet, dass** die Blende (10) wenigstens einen Steuernocken (13) aufweist, der in eine Bewegungsbahn des Führungsabschnitts (9) hineinragt und mit einer auf die Anlaufschräge (15) abgestimmten Gleitkontur (16) versehen ist.

8. Beschattungsvorrichtung nach Anspruch 1, **dadurch gekennzeichnet, dass** eine Umrisskontur der Blende (10) derart auf eine fahrzeugseitige Begrenzungskontur eines Fahrzeuginnenraumabschnittes im Bereich der Beschattungsstellung des Beschattungsgebildes (8) abgestimmt ist, dass die Umrisskontur in der Funktionslage der Blende (10) im Wesentlichen bündig mit der fahrzeugseitigen Begrenzungskontur abschließt.

9. Beschattungsvorrichtung nach Anspruch 1, 2 oder 3, **dadurch gekennzeichnet, dass** die Zwangssteuereinrichtung dem Auszugprofil zugeordnet ist und wenigstens ein an dem Auszugprofil beweglich gelagertes Steuerelement (17a, 17b, 17c) aufweist, das für eine Überführung der Blende (10a) in die Funktionslage und/oder die Ruhelage mit der Blende (10a) kontaktierbar ist.

10. Beschattungsvorrichtung nach Anspruch 9, **dadurch gekennzeichnet, dass** das wenigstens eine Steuerelement (17b) quer zu einer Verschiebebewegung wenigstens eines Führungsabschnittes (9b) an dem Mittelabschnitt (11b) linearbeweglich gelagert ist.

11. Beschattungsvorrichtung nach Anspruch 9, **dadurch gekennzeichnet, dass** das wenigstens eine Steuerelement (17a, 17c) schwenkbeweglich an dem Führungsabschnitt (9a) oder dem Mittelabschnitt (11c) gelagert ist.

12. Beschattungsvorrichtung nach einem der Ansprüche 9 bis 11, **dadurch gekennzeichnet, dass** der wenigstens eine Führungsabschnitt (9a bis 9c) und das wenigstens eine Steuerelement (17a, 17b, 17c) zueinander komplementäre Steuerkonturen (20 bis 22; 15b, 15c) aufweisen, die einander für Verlagerungsbewegungen des Steuerelements (17a, 17b, 17c) und des Führungsabschnittes (9a, 9b, 9c) gleit- oder rollbeweglich kontaktieren.

## Claims

1. Shading device for a vehicle interior (2), comprising a flexible shading structure (8) which is displaceable between a compactly stored rest position and a deployed shading position and which is provided with a pull-out profile (5) on its face end region that is in front in the deployment direction, the pull-out profile having a central portion (11) and on opposite end sides of the central portion (11) telescopic shiftable guiding portions (9) which are displaceable in vehicle-related guidances (6),
**characterized in that**
a shield (10) is disposed on the central portion (11), which shield is mounted to be movable relative to the central portion (11) between a rest condition and a functional condition, and **in that** for displacement of the shield (10) in at least one direction between the rest condition and the functional condition a forced control device is provided to displace the shield (10) in response to a shifting move of at least one guiding portion (9).

2. Shading device according to claim 1, **characterized in that** the shield (10) is pivotably mounted on the central portion (11).

3. Shading device according to claim 1 or 2, **characterized in that** a return spring arrangement (17) is assigned to the shield (10) and exerting a permanent spring load on the shield (10) towards the rest condition.

4. Shading device according to claim 1, **characterized in that** the forced control device includes complementary mechanical control contours (15, 16) on at least one guiding portion (9) on the one hand side and on the shield (10) on the other hand side, which control contours cooperate during a displacement movement of the pull-out profile (5) between the rest position and the shading position.

5. Shading device according to claim 4, **characterized in that** the control contours have a design of sliding contours displaceable in relation to each other.

6. Shading device according to claim 5, **characterized in that** the at least one guiding portion (9) is provided with a ramp surface (15) acting as a sliding contour in a face end region facing the other guiding portion (9).

7. Shading device according to claim 6, **characterized in that** the shield (10) has at least one control cam (13) which protrudes into a trajectory of the guiding portion (9) and is provided with a sliding contour (16) that is matched to the ramp surface (15).

8. Shading device according to claim 1, **characterized in that** a peripheral contour of the shield (10) is matched to a vehicle-related boundary contour of a vehicle interior section in the region of the shading position of the shading structure (8) in such a manner that the peripheral contour in the functional condition of the shield (10) is aligned essentially flush with the vehicle-related boundary contour.

9. Shading device according to claim 1, 2 or 3, **characterized in that** the forced control device is assigned to the pull-out profile and has at least one control element (17a, 17b, 17c) movably mounted on the pull-out profile, which element is contactable with the shield (10a) for transferring the shield (10a) to the functional condition and/or the rest condition.

10. Shading device according to claim 9, **characterized in that** the at least one control element (17b) is mounted on the central portion (11b) for linear movement transversely to a shifting movement of at least one guiding portion (9b).

11. Shading device according to claim 9, **characterized in that** the at least one control element (17a, 17c) is pivotably mounted on the guiding portion (9a) or the central portion (11c).

12. Shading device according to any of claims 9 to 11, **characterized in that** the at least one guiding portion (9a to 9c) and the at least one control element (17a, 17b, 17c) have mutually complementary control contours (20 to 22; 15b, 15c) which contact one another in sliding or rolling move for displacement movements of the control element (17a, 17b, 17c) and the guiding portion (9a, 9b, 9c).

## Revendications

1. Dispositif d'ombrage pour l'intérieur d'un véhicule (2) avec une structure d'ombrage (8) flexible, déplaçable entre une position de repos compactement entreposée et une position d'ombrage tendue, et pourvue d'un profilé de tirage (5) sur sa face d'extrémité frontale dans la direction de sortie, ledit profilé présentant une partie centrale (11) et sur des côtés d'extrémité opposés de la partie centrale (11) des parties de guidage (9) télescopiques mobiles, déplaçables dans des guidages (6) liés au véhicule,
**caractérisé en ce que**
sur la partie centrale (11) un écran (10) est disposé et monté pour se déplacer par rapport à la partie centrale (11) entre un état de repos et un état de fonctionnement, et **en ce que** pour le déplacement de l'écran (10) vers au moins une direction entre l'état de repos et l'état de fonctionnement un dispositif de commande forcée est fourni et déplace l'écran (10) en fonction d'un mouvement d'au moins une partie de guidage (9).

2. Dispositif d'ombrage selon la revendication 1, **caractérisé en ce que** l'écran (10) est monté à pivotement sur la partie centrale (11).

3. Dispositif d'ombrage selon la revendication 1 ou 2, **caractérisé en ce qu'**un arrangement de ressort de rappel (17) est associé à l'écran (10) en exerçant une force de ressort permanente sur l'écran (10) vers la direction de l'état de repos.

4. Dispositif d'ombrage selon la revendication 1, **caractérisé en ce que** le dispositif de commande forcée comporte des contours de commande mécaniques complémentaires (15, 16) sur au moins une partie de guidage (9) d'une part et sur l'écran (10) d'autre part, les contours de commande coopérant pendant un mouvement de déplacement du profilé de tirage (5) entre la position de repos et la position d'ombrage.

5. Dispositif d'ombrage selon la revendication 4, **caractérisé en ce que** les contours de commande sont configurés sous forme de contours glissants déplaçables l'un par rapport à l'autre.

6. Dispositif d'ombrage selon la revendication 5, **caractérisé en ce que** l'au moins une partie de guidage (9) est pourvue d'une surface de rampe inclinée (15) servant de contour glissant dans une face d'extrémité frontale tourné vers l'autre partie de guidage (9).

7. Dispositif d'ombrage selon la revendication 6, **caractérisé en ce que** l'écran (10) présente au moins une came de commande (13) qui avance dans une trajectoire de la partie de guidage (9) et est pourvue d'un contour glissant (16) adapté à la surface de rampe inclinée (15).

8. Dispositif d'ombrage selon la revendication 1, **caractérisé en ce qu'**un contour périphérique de l'écran (10) est adapté au contour de délimitation côté véhicule d'une section d'intérieur de véhicule dans la région de la position d'ombrage de la structure d'ombrage (8) de telle manière que dans l'état de fonctionnement de l'écran (10) le contour périphérique forme une surface essentiellement plane avec le contour de délimitation côté véhicule.

9. Dispositif d'ombrage selon la revendication 1, 2 ou 3, **caractérisé en ce que** le dispositif de commande forcée est associé au profilé de tirage et comporte au moins un élément de commande (17a, 17b, 17c) monté pour se déplacer sur le profilé de tirage, ledit élément peut être mise en contact avec l'écran (10a) pour transférer l'écran (10a) vers l'état de fonctionnement et/ou vers l'état de repos.

10. Dispositif d'ombrage selon la revendication 9, **caractérisé en ce que** l'au moins un élément de commande (17b) est monté sur la partie centrale (11b) pour un mouvement linéaire transversalement par rapport à un mouvement de coulissement de l'au moins une partie de guidage (9b).

11. Dispositif d'ombrage selon la revendication 9, **caractérisé en ce que** l'au moins un élément de commande (17a, 17c) est monté à pivotement sur la partie de guidage (9a) ou sur la partie centrale (11c).

12. Dispositif d'ombrage selon l'une quelconque des revendications 9 à 11, **caractérisé en ce que** l'au moins une partie de guidage (9a à 9c) et l'au moins un élément de commande (17a, 17b, 17c) présentent des contours de commande (20 à 22 ; 15b, 15c) mutuellement complémentaires faisant contact l'un à l'autre en glissant ou roulant pour des mouvements de déplacement de l'élément de commande (17a, 17b, 17c) et de la partie de guidage (9a, 9b, 9c).
